# EUROPEAN PATENT SPECIFICATION

(11) **EP 3 569 739 B1**
(45) Date of publication and mention of the grant of the patent: **07.05.2025**
(21) Application number: 17891882.7
(22) Date of filing: 27.12.2017
(51) Int. Cl.: C25B 1/28, C25B 1/30, C25B 1/00

(54) **METHOD OF PRODUCING AMMONIUM PERSULFATE**
VERFAHREN ZUR HERSTELLUNG VON AMMONIUMPERSULFAT
PROCÉDÉ DE PRODUCTION DE PERSULFATE D'AMMONIUM

(30) Priority: 13.01.2017 JP 2017003993; 24.08.2017 JP 2017161111
(43) Date of publication of application: 20.11.2019
(73) Proprietor: Toray Industries, Inc., Tokyo 103-8666 (JP)
(72) Inventor: YOSHII, Mio, Tokyo 103-8666 (JP); TEZUKA, Mikihito, Tokai-shi Aichi 476-8567 (JP); FUKUDA, Fumio, Tokai-shi Aichi 476-8567 (JP)
(74) Representative: Mewburn Ellis LLP
(86) International application number: PCT/JP2017/047065
(87) International publication number: WO 2018/131493

(56) References cited:
- WO-A1-97/16584
- CN-A- 104 152 943
- GB-A- 746 786
- JP-A- 2000 038 691
- KR-B1- 101 528 911
- SUGINO, KIICHIRO ET AL.: "Preparation of Ammonium Persulfate at Our Electrodeposited Lead Peroxide Anode (Consisted of Lead Peroxide Only)", THE JOURNAL OF CHEMICAL SOCIETY OF JAPAN CHEMISTRY SECTION, vol. 50, no. 4-5, 1 May 1947 (1947-05-01), pages 34 - 38, XP009515454, DOI: 10.1246/nikkashi1898.50.34

## Description

### Technical Field of the Invention

The present invention relates to a method of producing ammonium persulfate using ammonium sulfate as a feedstock, and specifically to a method of producing ammonium persulfate which can produce ammonia persulfate and simultaneously coproduce ammonia.

### Background Art of the Invention

Ammonium sulfate is also called as an abbreviation thereof, and was once synthesized as a target substance, but now it is mainly marketed as a byproduct obtained in an industry for organic chemical such as caprolactam, laurolactam, acrylonitrile, methyl methacrylate or in a coke production process due to coal dry distillation. Since ammonium sulfate contains about 20% ammonia nitrogen, it is possible to use it as a fertilizer, and most of ammonium sulfate obtained as a byproduct in the above-described processes is used for a fertilizer. However, since ammonium sulfate has sulfuric acid roots, it also has negative aspects in plant growth such as soil acidification and salt formation, and the amount of fertilization is limited. For this reason, most of ammonium sulfate obtained as a byproduct nowadays in Japan is exported under the present circumstances.

As a method of coping with such problems, conventionally, processes of producing caprolactam, acrylonitrile or methyl methacrylate which do not cause ammonium sulfate as a byproduct have been developed. However, these processes have problems such as complicated processes or difficulty in converting from existing processes. Therefore, many ammonium sulfates are still caused as byproduct in large excess, and are currently exported at low prices.

On the other hand, ammonium persulfate is widely and industrially utilized mainly as a polymerization initiator for emulsion polymerization, an oxidation bleach, a copper etching agent and the like. As a method of producing ammonium persulfate which has been known up to now, as an anode-side feedstock of an electrolytic process, a method using an aqueous solution containing ammonium hydrogen sulfate as described in Patent document 1, a method using a an aqueous solution of ammonium sulfate alone as described in Patent document 2, and a method using ammonium sulfate and ammonium persulfate as described in Patent Document 3, are known. As the cathode-side feedstock, in any of the methods, only aqueous sulfuric acid solution or aqueous sulfuric acid solution containing salt is selected, and in any case, the amount of charge transfer due to electrolysis has been controlled at less than the amount of sulfuric acid-derived acid dissociable hydrogen ions. In other words, all of the cathode-side electrolytic reactions have been carried out only in the reaction in which the sulfuric acid-derived hydrogen ion becomes a hydrogen molecule as shown in the following reaction formula.

2H⁺ + 2e⁻ → H₂

In this method, since hydrogen ion of sulfuric acid is consumed, and is exchanged with ammonium ion that has been electrophoresed from the anode side, an ammonium sulfate aqueous solution is obtained as a cathode-side product. This aqueous solution has been reused as an anode-side feedstock.

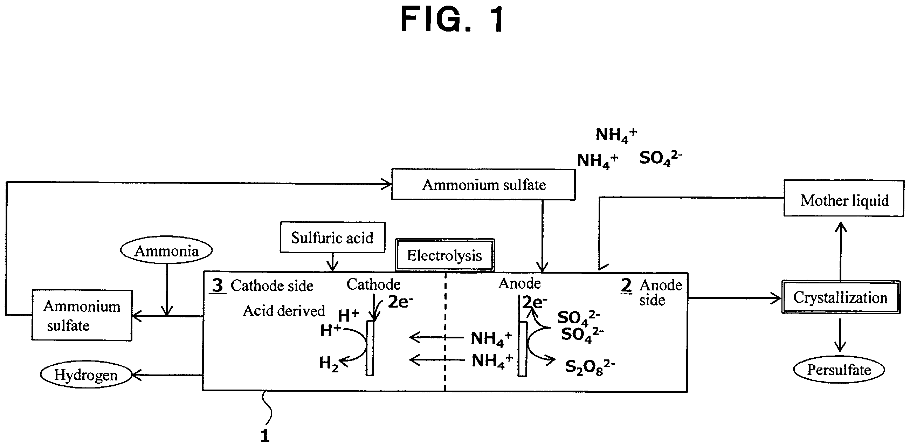

For example, as shown in Fig. 1, ammonium sulfate ((NH₄) ₂ SO₄) is supplied to the anode side 2 of electrolyzer 1 as an anode-side feedstock, and as an anode reaction, sulfuric acid is reacted (consumed) as follows. persulfuric ion is caused.

2SO₄²⁻ → S₂O₈²⁻ + 2e⁻

Dissolved ion is as follows:
before electrolysis: NH₄⁺, SO₄²⁻ = ammonium sulfate aqueous solution,
after electrolysis: NH₄⁺, S₂O₈²⁻ = ammonium persulfate aqueous solution,
ammonium ion electrophoreses to the cathode side, and ammonium persulfate aqueous solution is produced.

On the other hand, on the cathode side 3, sulfuric acid is supplied, and as a cathode reaction, sulfur acid-derived hydrogen ions react (consume) and hydrogen gas is generated as shown in the following reaction formula.

2H⁺ + 2e⁻ → H₂

Dissolved ion is as follows:
before electrolysis: H⁺, SO₄²⁻ = sulfuric acid aqueous solution,
after electrolysis: NH₄⁺, H⁺, SO₄²⁻ = ammonium sulfate aqueous solution,
the ammonium ion electrophoresed from the anode side is concentrated, and an ammonium sulfate aqueous solution is produced. Ammonia is further added to this ammonium sulfate aqueous solution to make it ammonium sulfate, and the ammonium sulfate is reused as the anode-side feedstock.

Non-patent document 1 concerns a method for producing ammonium persulfate by electrolyzing ammonium sulfate. The anode-side feedstock includes ammonium sulfate, an ammonium fluoride polarizing agent and 20% sulfuric acid. The cathode-side feedstock includes a saturated solution of ammonium sulfate and sulfuric acid as an unavoidable impurity.

Patent document 4 concerns a method for producing ammonium persulfate by electrolyzing ammonium sulfate. The anode-side feedstock includes ammonium sulfate. The cathode-side feedstock includes an aqueous solution containing ammonium sulfate and sulfuric acid.

### Prior art documents

Patent document 1: JP-A-SHO 57-198275
Patent document 2: JP-A-HEI 11-293484
Patent document 3: JP-A-2001-220695
Patent document 4: KR 101 528 911 B1

Non-patent Document 1: SUGINO, Kiichiro et al., The Journal of Chemical Society of Japan Chemistry Section, vol. 50, no. 4-5, pages 34-38

### Summary of the Invention

### Problems to be solved by the Invention

As described above, in the prior art, although ammonium sulfate is utilized as the anode-side feedstock, since the ammonium sulfate aqueous solution is generated on the cathode side and it is reused as the anode-side feedstock, in such a process of producing ammonium persulfate, it was not possible to use a large amount of ammonium sulfate, which is a byproduct produced from other processes cheaply and excessively, and it was necessary to use ammonia and sulfuric acid as feedstocks.

Accordingly, in view of the prior art as described above, an object of the present invention is to provide a method capable of utilizing a large amount of ammonium sulfate produced as a byproduct in other processes cheaply and excessively as an anode-side feedstock in the process of the present invention, in particular, capable of producing ammonia which can be effectively utilized in various processes without generating ammonium sulfate which has been conventionally reused, and besides, capable of producing ammonium persulfate with a high efficiency.

### Means for solving the Problems

To achieve the above-described objects, a method of producing ammonium persulfate according to the present invention is a method of producing ammonium persulfate (chemical formula: (NH₄)₂S₂O₈) by electrolyzing ammonium sulfate (chemical formula: (NH₄)₂SO₄) characterized in that, in an electrolyzer which is separated into a anode chamber and a cathode chamber by a cation exchange membrane, an ammonium sulfate aqueous solution is supplied as an anode-side feedstock, a solution containing less than 1.0 mol of acid-derived acid dissociable hydrogen ions per 1.0 mol of amount of charge transfer, which is an ammonium sulfate aqueous solution is supplied as a cathode-side feedstock, and electrolysis is performed to produce ammonium persulfate on the anode side and at least ammonia on the cathode side.

Namely, the method of producing ammonium persulfate according to the present invention is a method of suppressing the amount of acid dissociable hydrogen ions of the cathode-side feedstock to an amount less than the amount of charge transfer due to the electrolysis and supplying the feedstock to the cathode side (cathode chamber), and by electrolysis, producing ammonium persulfate on the anode side similarly in the conventional technology and producing at least ammonia, more specifically, for example, ammonia hydroxide/ammonia gas and hydrogen gas on the cathode side.

In the method of producing ammonium persulfate according to the present invention, as the solution containing less than 1.0 mol of acid-derived acid dissociable hydrogen ions per 1.0 mol of amount of charge transfer, which is supplied as the above-described cathode-side feedstock, although water can also be used, in order to efficiently perform the electrolysis and the reaction in the present invention, it is preferred to use an electrolyte-containing solution. As such a cathode-side feedstock solution, an ammonium sulfate solution is used. In some embodiments the concentration of the ammonium sulfate aqueous solution as the cathode-side feedstock is preferably in a range of 30 to 45% by weight.

In some embodiments the concentration of the ammonium sulfate aqueous solution as the anode-side feedstock is preferably in a range of 30 to 45% by weight. More preferably, it is 40 to 45% by weight. By using such a high concentration ammonium sulfate aqueous solution as the anode-side feedstock, ammonium persulfate can be produced industrially advantageously. Both the anode side and the cathode side may be a batch system for the feedstock supply and product delivery systems, but the continuous system is more industrially advantageous.

As aforementioned, the ammonium persulfate produced by the method of producing ammonium persulfate according to the present invention can be widely used industrially as a polymerization initiator for emulsion polymerization, an oxidation bleach, a copper etching agent, etc., and ammonia can be utilized in various processes in addition to the lactam production process described later, and hydrogen can be utilized as a hydrogenation process of organic chemical industry, fuel for fuel cells or the like.

### Effect according to the Invention

Thus, according to the method of producing ammonium persulfate according to the present invention, because ammonium sulfate which does not depend on ammonium sulfate which is generated in the system can be used as a main feedstock, it is industrially advantageous, and further, because it is an electrolytic process, not only ammonium persulfate but also valuable materials such as ammonia and hydrogen can be co-produced, and furthermore, it is possible to provide a method of producing ammonium persulfate which can produce it with a high current efficiency of ammonium persulfate production of 80% or more, more preferably 85% or more, particularly preferably 90% or more.

### Brief explanation of the drawings

[Fig. 1] Fig. 1 is a schematic block diagram showing an example of the conventional method of producing ammonium persulfate.
[Fig. 2] Fig. 2 is a schematic block diagram showing a method of producing ammonium persulfate according to an embodiment of the present invention.

### Embodiments for carrying out the Invention

Hereinafter, the present invention will be explained in more detail together with embodiments.

The method of producing ammonium persulfate according to the present invention is a method of producing ammonium persulfate by electrolyzing ammonium sulfate characterized in that an ammonium sulfate aqueous solution is supplied as an anode-side feedstock, a solution containing less than 1.0 mol of acid-derived acid dissociable hydrogen ions per 1.0 mol of amount of charge transfer is supplied as a cathode-side feedstock, and electrolysis is performed to produce ammonium persulfate on the anode side and at least ammonia on the cathode side.

As the anode-side feedstock, for example, an ammonium sulfate aqueous solution containing ammonium ion of amount of charge transfer or more can be used, and sulfuric acid and ammonium hydroxide may be in an excess state. Although the concentration is not particularly limited, industrially, the higher the concentration is, the more advantageous it is, and a concentration range of 30 to 45% by weight of ammonium sulfate is preferable. Although the anode-side feedstock contains a necessary amount of polarizer, the polarizer is not particularly limited as long as it is advantageous for a known production of persulfate. As preferred polarizers, guanidine, guanidine salt, thiocyanate, cyanide, cyanate, fluoride and the like are used. Particularly preferred one is guanidine or guanidine salt. As the guanidine salt, guanidine sulfamate, guanidine nitrate, guanidine sulfate, guanidine phosphate, guanidine carbonate, or the like, can be exemplified. As the concentration of the polarizer, 0.01 to 1% by weight with respect to the anode side feedstock can be exemplified, and it is preferably 0.01 to 0.05% by weight.

The cathode-side feedstock is an ammonium sulfate aqueous solution. By using an ammonium sulfate aqueous solution, the electrical resistance is reduced because it contains an electrolyte, and since it is composed of ions having the same composition as the anode side feedstock separated from a diaphragm, and further, sulfuric acid-derived acid hydrogen ion subjected to a cathode reaction does not exist, maximum ammonia can be produced. Although the concentration is not particularly limited, with respect to ammonium sulfate, industrially, the higher the concentration is, the more advantageous it is, and a concentration range of 30 to 45% by weight is more preferable. Further, industrially, it is more preferable to use an ammonium sulfate aqueous solution than to use sulfuric acid, from the viewpoint of ammonia production efficiency and the selection of materials used for cathode by reducing corrosiveness caused by sulfuric acid.

The following reaction formula (1) is prioritized in the range where sulfur acid-derived hydrogen ion is present in the anode liquid, and hydrogen is generated as a cathode-side product, but after the acid-derived hydrogen ion has reached to a condition of deficiency, reactions such as the following reaction formula (2) and the following reaction formula (3) are prioritized. Since the equilibrium reaction of the following reaction formula (4) exists in the system, hydrogen and ammonia can be generated as cathode-side products in any of the reaction formula (2) and the reaction formula (3).

2H⁺ + 2e⁻ → H₂ (1)

2NH₄⁺ + 2e⁻ → 2NH₃ + H₂ (2)

2H₂O + 2e⁻ → H₂ + 2OH⁻ (3)

NH₄⁺ + OH⁻ ⇄ NH₃ + H₂O (4)

The electrolyzer used in the present invention is not particularly limited, and may be an electrolyzer which is divided into an anode chamber and a cathode chamber, which are separated by a diaphragm. A box type electrolyzer or a filter press type electrolyzer can be used. Here, for the diaphragm which separates the anode chamber and the cathode chamber, a diaphragm which can inhibit the electrophoresis of the anion generated in the anode chamber to the cathode chamber is used. As the diaphragm a cation exchange membrane is used.

The anode is preferably platinum or platinum group, but a known material with a high oxygen overvoltage such as a conductive diamond electrode can also be used. As the cathode, preferably, lead, zirconium, platinum, nickel, and a stainless steel such as SUS 316 can be used. Further, as the electrode, a wire mesh made of these metals can be used.

The current density of the anode is preferably 20 A/dm² or more. If it is lower than this, the current efficiency may be low. Preferably, it is 40 A/dm² or more, and preferably 500 A/dm² or less, more preferably 200 A/dm² or less, and particularly preferably 80 A/dm² or less. Industrially, operation at a high current density is more preferred because the device size can be reduced. The temperature in the electrolyzer is preferably 15 to 40°C. By setting this range, dissolution of salts in the electrolyzer can be maintained in an appropriate range, and undesirable side reactions can be suppressed, that are preferred.

By employing the production method of the present invention, ammonium persulfate can be produced with a high current efficiency. Under preferable conditions, ammonium persulfate can be produced at a current efficiency of 80% or more, more preferably at a current efficiency of 85% or more, particularly preferably 90% or more. The upper limit of the current efficiency is theoretically 100%. Here, the current efficiency (%) is a value represented by (generated persulfuric ion (mol) × 2)/current magnitude (F) × 100, and it can be calculated by measuring the amount of persulfuric ion generated per unit current magnitude.

Since persulfuric ion is generated in the anode solution by electrolysis at a state where the anode solution is filled in the anode chamber, this anode produced solution is supplied to, for example, a widely used crystallization tank similarly to in the conventional technology, thereby making it possible to perform a concentration crystallization. The ammonium persulfate-containing slurry after crystallization is separated into ammonium persulfate crystals and a crystallization mother liquid by a solid-liquid separator such as a centrifugal separator used widely and commonly. The obtained ammonium persulfate crystals can be dried and commercialized using a powder drier. The crystallization mother liquid can be re-supplied to the process as an anode-side feedstock.

Further, by performing electrolysis by applying an electric current of the aforementioned amount of charge transfer or more at a state where a cathode solution is passed through the cathode chamber, a mixed gas of hydrogen and ammonia in a cathode produced gas in the cathode chamber and/or ammonium hydroxide (ammonia-containing water) in the cathode produced solution is produced. The hydrogen-ammonia mixed gas produced on the cathode side can be separated by ammonia gas separation methods used widely and commonly, for example, such as cryogenic separation and compression separation. Further, in case where the destination of supplying the produced ammonia is a process supplied as ammonia water, for example, such as a neutralized salt conversion process in a lactam process, it can be separated using a gas absorption tower used widely and commonly and can also be recovered as ammonia water.

The separated hydrogen gas can be purified and compressed using a pressure swing adsorption method or the like, and can be utilized for a hydrogenation process of organic chemical industry or as fuel for fuel cells.

In the method of producing ammonium persulfate according to the present invention, ammonium sulfate which is produced as a byproduct in the aforementioned production process of lactam, acrylonitrile, methyl methacrylate or the like and coke production process by coal dry distillation can used as the feedstock. In this connection, the byproducts containing ammonium sulfate in various processes may contain impurities other than ammonium sulfate, etc., and depending upon their components and contents, by occurrence of side reactions, the current efficiency in the production process of ammonium persulfate may decrease. In such a case, it is preferred to purify the byproduct containing ammonium sulfate in advance to reduce the components that reduce the current efficiency, and then supply it to the ammonium persulfate production process.

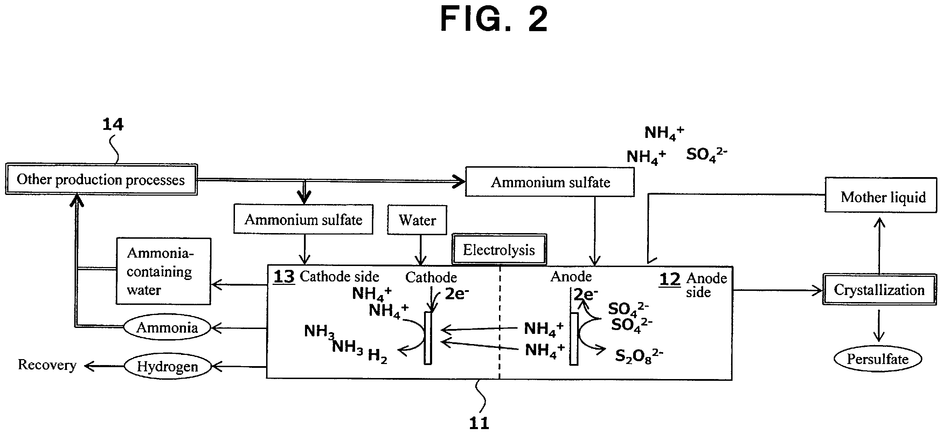

As a concrete example of the method of producing ammonium persulfate according to the present invention, Fig. 2 exemplifies a case of using ammonium sulfate (abbreviation thereof) solution as the cathode-side feedstock solution. In Fig. 2, symbol 11 indicates an electrolyzer, and ammonium sulfate ((NH₄)₂SO₄) produced as a byproduct, for example, in a lactam production process 14 as other production processes 14 is supplied to the anode side 12 of the electrolyzer 11 as the anode-side feedstock, and as the anode reaction, sulfuric ion is reacted (consumed) to generate persulfuric ion, as shown in the following description, similarly to in the conventional technology.

2SO₄²⁻ → S₂O₈²⁻ + 2e⁻

Dissolved ion is as follows:
before electrolysis: NH₄⁺, SO₄²⁻ = ammonium sulfate aqueous solution,
after electrolysis: NH₄⁺, S₂O₈²⁻ = ammonium persulfate aqueous solution,
ammonium ion electrophoreses to the cathode side, and ammonium persulfate aqueous solution is produced. This solution produced on the anode side is concentrated and crystallized to be separated into a crystallization mother liquid and crystals, and the crystals can be commercialized as a salt of ammonium persulfate by, for example, a powder drier. The crystallization mother liquid can be re-supplied to the process as the anode-side feedstock.

On the other hand, on the cathode side 13, water and an ammonium sulfate solution (an abbreviation thereof solution) comprising ammonium sulfate which is produced as a byproduct in, for example, lactam production process 14 are supplied and as the anode reaction, because hydrogen ion of reaction source is not present or is poor, as shown in the following reaction formula, ammonium ion electrophoresed from the anode is reacted to produce ammonia and hydrogen. Further, in case where a small amount of acid is present on the cathode side 13, acid-derived hydrogen ions react (consume) to generate hydrogen gas as shown in the following reaction formula.

2NH₄⁺ + 2e⁻ → 2NH₃ + H₂

2H⁺ + 2e⁻ → H₂ (case where a small amount of acid is present)

The dissolved ion, to explain the case where ammonium sulfate solution (abbreviation thereof solution) comprising ammonium sulfate is supplied to the cathode side 13, is as follows:
before electrolysis: NH₄⁺, SO₄²⁻ = ammonium sulfate aqueous solution,
after electrolysis: NH₄⁺, SO₄²⁻ = ammonium sulfate aqueous solution,
and substantially there is no change. Namely, except for the case where a small amount of acid is present on the cathode side 13 and the acid-derived hydrogen ion reacts (consumes) as described above, the dissolved ion on the cathode side 13 does not substantially change.

Thus, on the cathode side 13, ammonia, ammonia-containing water, and hydrogen are produced without producing ammonium sulfate, and ammonia and ammonia-containing water can be used for the lactam production process etc., and the hydrogen is recovered and can be used in various fields.

### Examples

Hereinafter, the present invention will be concretely explained by way of examples, but the present invention is not limited at all by these examples. Where, the current efficiency in the examples is represented by (generated persulfuric ion (mol) × 2)/current magnitude (F) × 100%, and it represents the ratio of persulfuric ion generated per unit current magnitude.

### (Example 1)

Using a transparent acrylic electrolyzer separated by cation exchange membrane (Nafion (registered trademark) 117, supplied by Chemours Corporation) as a diaphragm, an electrode comprising an 80 opening per 25.4 mm (80 mesh) platinum wire mesh and titanium was used as the anode, and an electrode comprising an 80 opening per 25.4 mm (80 mesh) SUS 316 wire mesh was used as the cathode. To the anode chamber, 500g of an aqueous solution adding 0.03 wt% of guanidine sulfamate as a polarizer to a 43 wt% ammonium sulfate aqueous solution was supplied. As the substance mass of the respective ions, ammonium ion is 3.25mol, and sulfuric ion is 1.63mol. 500g of 43 wt% ammonium sulfate aqueous solution was supplied to the cathode chamber. After supply, the anode current density was energized at 45 A/dm². The amount of charge transfer was 0.67mol. The amount of charge transfer can be determined by a value of the amount of current flow × time of current flow. After energization, the concentration of ammonium persulfate in the resulting anode produced solution was measured by titration. In the anode, 0.315mol of ammonium persulfate was produced, and the current efficiency was 94%. Further, generation of hydrogen and ammonia corresponding to the amounts of electrolytic reaction was recognized from the cathode generated gas during the electrolysis.

### (Example 2)

The energization was performed at an anode current density of 6.43 A/dm² using the same device as in Example 1 and the same anode chamber feed solution composition and cathode chamber feed solution composition. The amount of charge transfer was 0.67mol. After energization, the concentration of ammonium persulfate in the resulting anode produced solution was measured by titration. In the anode, 0.311mol of ammonium persulfate was produced, and the current efficiency was 93%. Further, generation of hydrogen and ammonia corresponding to the amounts of electrolytic reaction was recognized from the cathode generated gas during the electrolysis.

### (Example 3)

The energization was performed at an anode current density of 2.86 A/dm² using the same device as in Example 1 and the same anode chamber feed solution composition and cathode chamber feed solution composition. The amount of charge transfer was 0.30mol. After energization, the concentration of ammonium persulfate in the resulting anode produced solution was measured by titration. In the anode, 0.140mol of ammonium persulfate was produced, and the current efficiency was 93%. Further, generation of hydrogen and ammonia corresponding to the amounts of electrolytic reaction was recognized from the cathode generated gas during the electrolysis.

### (Comparative Example 2)

A neutral alumina diaphragm was used as the diaphragm, and the other experimental device such as electrolyzer and the like and the anode chamber feed solution composition were the same as in Example 1. To the cathode chamber, 500g of a 10 wt% ammonia aqueous solution was supplied. After supply, the energization was performed at an anode current density of 45 A/dm². The amount of charge transfer was 0.67mol. After energization, the concentration of ammonium persulfate in the resulting anode produced solution was measured by titration. In the anode, 0.295mol of ammonium persulfate was produced, and the current efficiency was 88%. Further, generation of hydrogen and ammonia corresponding to the amounts of electrolytic reaction was recognized from the cathode generated gas during the electrolysis.

### (Example 5)

In the same device as in Example 1, ammonium sulfate containing an impurity produced as a byproduct in the lactam process was directly used to make the feed solution compositions for the anode chamber and the cathode chamber similar to in Example 1. The anode current density was 45 A/dm², and electricity was applied so as to achieve the amount of charge transfer by which the concentration of ammonium persulfate in the anode produced solution became the same as in Example 1. The concentration of ammonium persulfate in the resulting anode produced solution was measured by titration. In the anode, 0.535mol of ammonium persulfate was produced, and the current efficiency was 80%. The obtained anode produced solution was dehydrated and concentrated under reduced pressure while being stirred in a double-tube glass vessel to crystallize ammonium persulfate. The pressure in the glass vessel at the time of concentration was about 2.67 kPa (20torr), the temperature of the contained solution was about 30°C., and the dehydration rate was 34.1%. The resulting slurry was filtered to separate it into mother liquid and cake, and the cake was further dried at a room temperature to obtain crystals of ammonium persulfate. When the purity of this ammonium persulfate crystal was determined, it was 98.4%. The mother liquid obtained by the filtration was added with an aqueous solution of ammonium sulfate produced as a byproduct in the lactam process by an equivalent amount of ammonium sulfate consumed in the electrolysis, and recycled as an anode chamber feed solution, and as the cathode chamber feed solution, the same one as in the previously performed first electrolysis was prepared separately. Electricity was applied under the same conditions as in the previously performed first electrolysis, and when the concentration of ammonium persulfate in the anode produced solution was measured, in the anode, 0.510mol of ammonium persulfate was produced, and the current efficiency was 86%. When the obtained electrolytic solution was concentrated, dehydrated and crystallized in the same device and conditions as in the previously performed first crystallization, the dehydration rate was 25.9%, and the purity of ammonium persulfate crystal was 98.7%. Furthermore, the mother liquid was recycled by the same operation and the electrolysis and crystallization were performed twice, for a total of 4 cycles, and the current efficiency at the 4th cycle was 85%, the dehydration rate was 31.8%, and the purity of the ammonium persulfate crystal was 99.4%. Further, in each of the electrolysis, generation of hydrogen and ammonia corresponding to the amounts of electrolytic reaction was recognized from the cathode generated gas during the electrolysis.

### (Comparative Example 1)

Electrolysis of ammonium persulfate was carried out with the composition and the amount of charge transfer based on the description of Patent document 2. The experimental device such as electrolyzer was the same as in Example 1. To the anode chamber, 500g of an aqueous solution adding 0.05 wt% of guanidine sulfamate as a polarizer to a 43 wt% ammonium sulfate aqueous solution was supplied. As the substance mass of each ion, ammonium ion was 3.26mol and sulfuric ion was 1.63mol. To the cathode chamber, 500g of aqueous solution of 18.9 wt% sulfuric acid and 28.4 wt% ammonium sulfate was supplied. As the substance mass of each ion, ammonium ion was 2.15mol, sulfuric ion was 2.14mol and hydrogen ion was 1.93mol. After the supply, the amount of current flow and the current flow time were controlled so that the amount of charge transfer became 1.92mol. After the energization, the composition of the solution in which the gas was collected with an excess of water from the anode produced solution, the cathode produced solution, and the cathode generation gas was analyzed by titration. On the anode side, 0.84mol of ammonium persulfate was produced, and on the cathode side, 0.84mol of ammonium sulfate and hydrogen corresponding to the amount of electrolytic reaction were produced and 0.84mol of sulfuric acid was consumed, but no ammonia was produced. The current efficiency at that time was 87%.

### Industrial Applicability

The method according to the present invention can produce ammonium persulfate with a high efficiency by electrolyzing ammonium sulfate as a feedstock, and can co-produce ammonia which can be effectively utilized for various processes without producing ammonium sulfate which is reused as in the conventional method, and can be applied extremely suitably to the production of ammonium persulfate which is required to efficiently consume ammonium sulfate that is excessively produced as a byproduct.

### Explanation of symbols

1, 11: electrolyzer
2, 12: anode side
3, 13: cathode side
14: other production processes

## Claims

1. A method of producing ammonium persulfate by electrolyzing ammonium sulfate is **characterized in that**, in an electrolyzer which is separated into an anode chamber and a cathode chamber by a cation exchange membrane, an ammonium sulfate aqueous solution is supplied as an anode-side feedstock, a solution containing less than 1.0 mol of acid-derived acid dissociable hydrogen ions per 1.0 mol of amount of charge transfer, which solution is an ammonium sulfate aqueous solution, is supplied as a cathode-side feedstock, and electrolysis is performed to produce ammonium persulfate on the anode side and at least ammonia on the cathode side.

2. The method of producing ammonium persulfate according to claim 1, wherein the concentration of the ammonium sulfate aqueous solution as the anode-side feedstock is in a range of 30 to 45% by weight.

3. The method of producing ammonium persulfate according to claim 1 or 2, wherein the concentration of the ammonium sulfate aqueous solution as the cathode-side feedstock is in a range of 30 to 45% by weight.

4. The method of producing ammonium persulfate according to any one of claims 1 to 3, wherein a polarizer is added to the anode-side feedstock.

5. The method of producing ammonium persulfate according to claim 4, wherein the polarizer is guanidine, guanidine salt or thiocyanate.

6. The method of producing ammonium persulfate according to any one of claims 1 to 5, wherein the anode is platinum, platinum group or a conductive diamond.

7. The method of producing ammonium persulfate according to any one of claims 1 to 6, wherein the ammonium sulfate in the anode-side feedstock solution includes one produced as a byproduct in a lactam production process.

8. The method of producing ammonium persulfate according to any one of claims 1 to 7, wherein the ammonia produced on the cathode side is used for a lactam production process.

## Patentansprüche

1. Verfahren zur Herstellung von Ammoniumpersulfat durch Elektrolysieren von Ammoniumsulfat, **dadurch gekennzeichnet, dass** eine wässrige Ammoniumsulfatlösung in einem Elektrolyseur, der durch eine Kationenaustauschmembran in eine Anodenkammer und eine Kathodenkammer geteilt ist, als anodenseitiger Rohstoff zugeführt wird, eine Lösung, die weniger als 1,0 Mol von säureabgeleiteten säure-dissoziierbaren Wasserstoffionen pro 1,0 Mol einer Menge eines Ladungstransfers enthält, die eine wässrige Ammoniumsulfatlösung ist, als kathodenseitiger Rohstoff zugeführt wird und die Elektrolyse durchgeführt wird, um Ammoniumpersulfat auf der Anodenseite und zumindest Ammoniak auf der Kathodenseite zu erhalten.

2. Verfahren zur Herstellung von Ammoniumpersulfat nach Anspruch 1, wobei die Konzentration der wässrigen Ammoniumsulfatlösung als anodenseitiger Rohstoff in einem Bereich von 30 bis 45 Gew.-% liegt.

3. Verfahren zur Herstellung von Ammoniumpersulfat nach Anspruch 1 oder 2, wobei die Konzentration der wässrigen Ammoniumsulfatlösung als kathodenseitiger Rohstoff in einem Bereich von 30 bis 45 Gew.-% liegt.

4. Verfahren zur Herstellung von Ammoniumpersulfat nach einem der Ansprüche 1 bis 3, wobei ein Polarisator zu dem anodenseitigen Rohstoff zugesetzt wird.

5. Verfahren zur Herstellung von Ammoniumpersulfat nach Anspruch 4, wobei der Polarisator Guanidin, Guanidinsalz oder Thiocyanat ist.

6. Verfahren zur Herstellung von Ammoniumpersulfat nach einem der Ansprüche 1 bis 5, wobei die Anode Platin, eine Platingruppe oder ein leitender Diamant ist.

7. Verfahren zur Herstellung von Ammoniumpersulfat nach einem der Ansprüche 1 bis 6, wobei das Ammoniumsulfat in der anodenseitigen Rohstofflösung eines umfasst, das als Nebenprodukt in einem Lactamherstellungsverfahren hergestellt wurde.

8. Verfahren zur Herstellung von Ammoniumpersulfat nach einem der Ansprüche 1 bis 7, wobei der Ammoniak, der auf der Kathodenseite hergestellt wird, für ein Lactamherstellungsverfahren verwendet wird.

## Revendications

1. Procédé de production de persulfate d'ammonium par électrolyse de sulfate d'ammonium est **caractérisé en ce que**, dans un électrolyseur qui est séparé en une chambre d'anode et une chambre de cathode par une membrane échangeuse de cations, une solution aqueuse de sulfate d'ammonium est fournie en tant que charge d'alimentation côté anode, une solution contenant moins de 1,0 mole d'ions hydrogène dissociables par acide dérivé d'acide pour 1,0 mole de quantité de transfert de charge, laquelle solution est une solution aqueuse de sulfate d'ammonium, est fournie en tant que charge d'alimentation côté cathode, et une électrolyse est effectuée pour produire du persulfate d'ammonium du côté anode et au moins de l'ammoniac du côté cathode.

2. Procédé de production de persulfate d'ammonium selon la revendication 1, dans lequel la concentration de la solution aqueuse de sulfate d'ammonium en tant que charge d'alimentation côté anode est dans une plage de 30 à 45 % en poids.

3. Procédé de production de persulfate d'ammonium selon la revendication 1 ou 2, dans lequel la concentration de la solution aqueuse de sulfate d'ammonium en tant que charge d'alimentation côté cathode est dans une plage de 30 à 45 % en poids.

4. Procédé de production de persulfate d'ammonium selon l'une quelconque des revendications 1 à 3, dans lequel un polariseur est ajouté à la charge d'alimentation côté anode.

5. Procédé de production de persulfate d'ammonium selon la revendication 4, dans lequel le polariseur est de la guanidine, un sel de guanidine ou du thiocyanate.

6. Procédé de production de persulfate d'ammonium selon l'une quelconque des revendications 1 à 5, dans lequel l'anode est du platine, un groupe de platine ou un diamant conducteur.

7. Procédé de production de persulfate d'ammonium selon l'une quelconque des revendications 1 à 6, dans lequel le sulfate d'ammonium dans la solution de charge d'alimentation côté anode inclut un sous-produit produit dans un procédé de production de lactame.

8. Procédé de production de persulfate d'ammonium selon l'une quelconque des revendications 1 à 7, dans lequel l'ammoniac produit du côté cathode est utilisé pour un processus de production de lactame.
